# EUROPEAN PATENT APPLICATION

(11) **EP 1 769 972 A1**
(43) Date of publication of application: **04.04.2007**
(21) Application number: 05765533.4
(22) Date of filing: 11.07.2005
(51) Int. Cl.: B60R 11/02, B60R 1/00, B60R 16/02

(54) **INFORMER AND VEHICLE HAVING INFORMER**

(30) Priority: 15.07.2004 JP 2004208543
(71) Applicant: MATSUSHITA ELECTRIC INDUSTRIAL CO., LTD., Osaka 571-8501 (JP)
(72) Inventor: HAMADA, Hiroyuki c/o Matsuhita El. Ind. Co., Ltd., Osaka-shi, Osaka 540-6319 (JP); IBARAKI, Susumu c/o Matsuhita El. Ind. Co., Ltd., Osaka-shi, Osaka 540-6319 (JP); MORIMOTO, Akihiro c/o Matsuhita El. Ind. Co., Ltd., Osaka-shi, Osaka 540-6319 (JP); OTSUKA, Masakazu c/o Matsuhita El. Ind. Co., Ltd., Osaka-shi, Osaka 540-6319 (JP); KUWABARA, Takashi c/o Matsuhita El. Ind. Co., Ltd., Osaka-shi, Osaka 540-6319 (JP); NAKAGAWA, Seiichi c/o Matsuhita El. Ind. Co., Ltd., Osaka-shi, Osaka 540-6319 (JP); NAGASHIMA, Kazumasa c/o Matsuhita E. In. Co., Ltd., Osaka-shi, Osaka 540-6319 (JP)
(74) Representative: Pautex Schneider, Nicole Véronique
(86) International application number: PCT/JP2005/012743
(87) International publication number: WO 2006/008994

(57) **Abstract**

Herein disclosed is an NOTIFICATION APPARATUS 10 comprising behavior detecting means 4 for detecting a behavior of a vehicle, video display means 8 for displaying a video, imaging means 3 for acquiring a video showing the front of the vehicle in a traveling direction; and control means 6 for controlling a display mode of the acquired video displayed by the video display means in accordance with the behavior detected by the behavior detecting means 4, thereby displaying the video taken by the imaging means 3 selectively in a full screen of the video display means 8 by an interrupt way and a split screen of the video display means 8 while the television picture is displayed. The notification apparatus 10 thus constructed can enhance riding comfort of vehicle passengers even though the vehicle passengers may watch, for example, a television picture.

## Description

### TECHNICAL FIELD OF THE INVENTION

The present invention relates to a notification apparatus and a vehicle having the notification apparatus.

### DESCRIPTION OF THE RELATED ART

As a notification apparatus for enhancing riding comfort of vehicle passengers, there have been well known an apparatus including a display unit for displaying driving operations of a vehicle driver such as right turn, left turn, deceleration, and stop, in order to prevent the vehicle passengers from suffering motion sickness (see, for example, Patent Document 1).
Patent Document 1: Japanese Laid-Open Patent Application No. 2002-154350 (page 2, FIG1)

### DISCLOSURE OF THE INVENTION

### PROBLEMS TO BE SOLVED

The conventional notification apparatus, however, encounters a drawback in that the vehicle passenger cannot be prevented from suffering motion sickness if the vehicle passengers watch, for example, a television apparatus mounted in a vehicle, and look away from information display unit, resulting from the fact that the vehicle passengers cannot be prevented from suffering motion sickness unless the vehicle passengers carefully watch the information display unit which displays driving operations of a vehicle driver such as right turn, left turn, deceleration, and stop.

The present invention is made to solve the foregoing drawback, and it is therefore an object of the present invention to provide a notification apparatus and a vehicle having the notification apparatus which can enhance riding comfort of the vehicle passengers even though the vehicle passengers may watch, for example, a television apparatus mounted in the vehicle.

### SOLUTION OF SOLVING THE PROBLEMS

In accordance with a first aspect of the present invention, there is provided a notification apparatus, comprising behavior detecting means for detecting a behavior of a vehicle, video display means for displaying a video, imaging means for acquiring a video showing the front of the vehicle in a traveling direction, and control means for controlling a display of the video displayed by the video display means, in accordance with the behavior detected by the behavior detecting means.

The notification apparatus according to the present invention thus constructed is operative to control a display mode of the video showing the front of the vehicle, and thus allows vehicle passengers to anticipate and prepare for the change of the vehicle behavior even though the vehicle passengers may watch, for example, TV pictures displayed by the video display means, thereby enhancing riding comfort of the vehicle passengers.

Further, the notification apparatus according to the present invention may further comprise acceleration detecting means for detecting of the vehicle, and the behavior detecting means may detect the behavior on the basis of the acceleration detected by the acceleration detecting means.

The notification apparatus according to the present invention thus constructed can reliably detect an acceleration imparted to the vehicle as the vehicle behavior.

Further, in the notification apparatus according to the present invention, the behavior detecting means may detect the behavior on the basis of vehicle driver's operation to the vehicle.

The notification apparatus according to the present invention thus constructed can reliably detect a behavior imparted to the vehicle such as left or right turn, acceleration or deceleration run, resulting from the fact that the behavior detecting means detects the vehicle behavior based on vehicle driver's operation to the vehicle such as steering operation, or accelerator operation.

Further, the notification apparatus according to the present invention may further comprise navigation means for guiding the vehicle along a travel route, and the behavior detecting means may detect the behavior on the basis of the travel route along which the navigation means guides the vehicle.

The notification apparatus according to the present invention thus constructed can anticipate a behavior to be imparted to the vehicle and let the vehicle passengers know it in advance, resulting from the fact that the notification apparatus can obtain roadway information in front of the vehicle in the traveling direction with ease.

Further, in the notification apparatus according to the present invention, the behavior detecting means may detect the behavior on the basis of the video acquired by the imaging means.

The notification apparatus according to the present invention thus constructed can anticipate a behavior to be imparted to the vehicle with ease and let the vehicle passengers know it in advance, resulting from the fact that the notification apparatus can obtain roadway information in front of the vehicle in the traveling direction with ease.

Further, in the notification apparatus according to the present invention, the control means may control the video display means to have the video display means display the video acquired by the imaging means.

The notification apparatus according to the present invention thus constructed can anticipate a behavior to be imparted to the vehicle with ease and let the vehicle passengers know it in advance, resulting from the fact that the notification apparatus can obtain roadway information in front of the vehicle in the traveling direction with ease.

Further, in the notification apparatus according to the present invention, the control means may control the video display means to have the video display means display the video acquired by the imaging means in a split screen.

The notification apparatus according to the present invention thus constructed can allow vehicle passengers to anticipate and prepare for the change of the vehicle behavior even though the vehicle passengers may watch, for example, TV pictures displayed by the video display means, resulting from the fact that the notification apparatus can have the video display means display the video showing the front of the vehicle even while the TV picture is displayed by the video display means in accordance with a behavior imparted to the vehicle.

Further, in the notification apparatus according to the present invention the control means may control the video display means to have the split screen displayed by the video display means moved in accordance with the behavior detected by the behavior detecting means.

The notification apparatus according to the present invention thus constructed can allow vehicle passengers to anticipate the vehicle behavior, resulting from the fact that the video display means is controlled to have the split screen displayed by the video display means moved in accordance with the behavior.

Further, in the notification apparatus according the present invention, the control means may control the video display means to have the split screen displayed by the video display means moved selectively in a moving direction and at a moving speed determined in accordance with a magnitude level of the behavior detected by the behavior detecting means.

The notification apparatus according to the present invention thus constructed can allow vehicle passengers to anticipate the vehicle behavior, resulting from the fact that the video display means is controlled to have the split screen displayed by the video display means moved selectively in the moving direction and at the moving speed determined in accordance with a magnitude level of the behavior.

Further, in the notification apparatus according to the present invention, the control means may control the video display means to have the split screen displayed by the video display means moved in a moving direction determined in accordance with a relief of a roadway detected by the behavior detecting means.

The notification apparatus according to the present invention thus constructed can allow vehicle passengers to anticipate the relief of the roadway, resulting from the fact that the video display means is controlled to have the split screen displayed by the video display means moved in accordance with the relief of the roadway.

In the notification apparatus according to the present invention, the control means may control the video display means to have a moving direction of the split screen displayed by the video display means changed in keeping with a position of a vehicle passenger sitting in a vehicle seat.

The notification apparatus according to the present invention thus constructed can allow vehicle passengers to recognize that the vehicle turns left or right correctly whenever the vehicle turns left or right even though the vehicle passengers sit in rear-facing seats and the screen of the video display means is facing toward the traveling direction of the vehicle, viz., the display screen of the video display means is facing toward a direction opposite to the rear of the vehicle, resulting from the split screen is moved in keeping with viewing fields of the vehicle passengers.

Further, in the notification apparatus according to the present invention, the control means may control the video display means to have a size of the split screen displayed by the video display means changed in accordance with a magnitude level of the behavior detected by the behavior detecting means.

The notification apparatus according to the present invention thus constructed can allow the vehicle passengers to anticipate the level of the vehicle behavior and prepare for the vehicle behavior, resulting from the fact that the size of the split screen is controlled in accordance with the magnitude level of the behavior.

Further, in the notification apparatus according to the present invention, the control means may control the video display means to have a transparency level of the split screen displayed by the video display means changed in accordance with a magnitude level of the behavior detected by the behavior detecting means.

The notification apparatus according to the present invention thus constructed can allow the vehicle passengers to anticipate the level of the vehicle behavior and prepare for the vehicle behavior, resulting from the fact that the transparency level of the split screen is controlled in accordance with the magnitude level of the behavior.

Further, in the notification apparatus according to the present invention, the control means may control the video display means to have the video display means display the video acquired by the imaging means in an interrupted screen.

The notification apparatus according to the present invention thus constructed can allow vehicle passengers to anticipate the change of the vehicle behavior in the middle of watching, for example, TV pictures, resulting from the fact that the video display means is controlled to have the TV pictures interrupted and the video showing the front of the vehicle displayed in accordance with a behavior imparted to the vehicle.

Further, in the notification apparatus according to the present invention, the control means may control the video display means to have a transparency level of the interrupted screen displayed by the video display means changed in accordance with a magnitude level of the behavior detected by the behavior detecting means.

The notification apparatus according to the present invention thus constructed can allow the vehicle passengers to anticipate the level of the vehicle behavior and prepare for the vehicle behavior, resulting from the fact that the transparency level of the split screen is controlled in accordance with the magnitude level of the behavior.

Further, the notification apparatus according to the present invention may comprise setting means for setting a display mode of the video displayed by the video display means.

The notification apparatus according to the present invention thus constructed can allow vehicle passengers to set the display mode using the setting means.

In accordance with a second aspect of the present invention, there is provided a vehicle having any one of the aforementioned notification apparatuses.

The vehicle having the notification apparatus according to the present invention thus constructed is operative to control a display mode of the video showing the front of the vehicle, and thus allows vehicle passengers to anticipate and prepare for the change of the vehicle behavior even though the vehicle passengers may watch, for example, TV pictures displayed by the video display means, thereby enhancing riding comfort of the vehicle passengers.

### EFFECT OF THE INVENTION

In accordance with the present invention, there is provided a notification apparatus and a vehicle having the notification apparatus which can enhance riding comfort of the vehicle passengers even though the vehicle passengers may watch, for example, a television apparatus mounted in the vehicle.

### BRIEF DESCRIPTION OF THE DRAWINGS

[FIG. 1] FIG. 1 is a block diagram showing a preferred embodiment of a motion sickness prevention apparatus according to the present invention.
[FIG. 2A] FIG. 2A is a view showing a television picture displayed by video display means of a preferred embodiment.
[FIG. 2B] FIG. 2B is a view showing a split screen displayed by the video display means.
[FIG. 3A] FIG. 3A is a view showing a split screen displayed by the video display means in a preferred embodiment.
[FIG. 3B] FIG. 3B is a view showing a split screen larger than the split screen shown in FIG. 3A.
[FIG. 4A] FIG. 4A is a first view showing a state that the split screen displayed by the video display means moves in accordance with a behavior of a vehicle in a preferred embodiment.
[FIG. 4B] FIG. 4B is a second view showing a state that the split screen displayed by the video display means moves in accordance with the behavior of the vehicle in a preferred embodiment.
[FIG. 4C] FIG. 4C is a third view showing a state that the split screen displayed by the video display means moves in accordance with the behavior of the vehicle in a preferred embodiment.
[FIG. 4D] FIG. 4D is a fourth view showing a state that the split screen displayed by the video display means moves in accordance with the behavior of the vehicle in a preferred embodiment.
[FIG. 4E] FIG. 4E is a fifth view showing a state that the split screen displayed by the video display means moves in accordance with the behavior of the vehicle in a preferred embodiment.
[FIG. 5] FIG. 5 is a view showing a relationship between a travel distance and a travel time in accordance with the behavior of the vehicle in a preferred embodiment.
[FIG. 6A] FIG. 6A is a first view showing a state that the split screen displayed by the video display means changes in accordance with the behavior of the vehicle in a preferred embodiment.
[FIG. 6B] FIG. 6B is a second view showing a state that the split screen displayed by the video display means changes in accordance with the behavior of the vehicle in a preferred embodiment.
[FIG. 6C] FIG. 6C is a third view showing a state that the split screen displayed by the video display means changes in accordance with the behavior of the vehicle in a preferred embodiment.
[FIG. 7] FIG. 7 is a view showing a TV picture and a video showing the front of the vehicle displayed by the video display means in a preferred embodiment.
[FIG. 8] FIG. 8 is a flow chart explaining the operation of the motion sickness prevention apparatus.

### EXPLANATION OF THE REFERENCE NUMERALS

- 10: Motion sickness prevention apparatus (notification apparatus)
- 1: Acceleration detecting means
- 2: Navigation means
- 3: Imaging means (video acquiring means)
- 4: Behavior detecting means
- 5: video creation means
- 6: Control means
- 7: Setting means
- 8: Video display means

### DESCRIPTION OF THE PREFERRED EMBODIMENTS

A preferred embodiment of a notification apparatus and a vehicle having the notification apparatus according to the present invention will be described hereinafter in accordance with accompanying drawings.

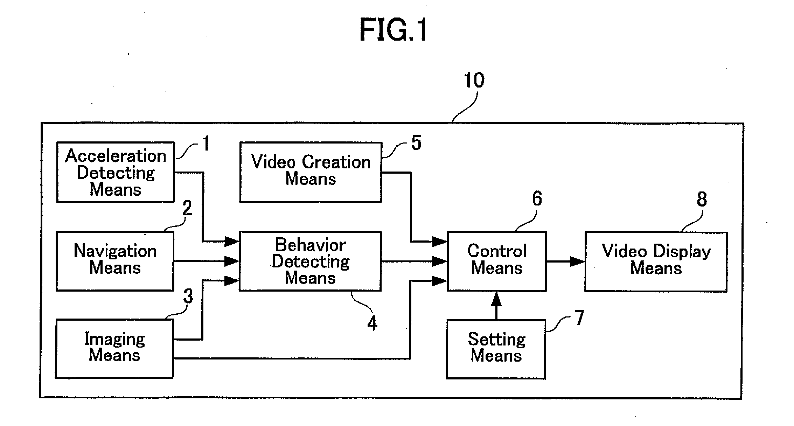

The following description will be directed to a preferred embodiment of a notification apparatus and a vehicle having the notification apparatus according to the present invention with reference to the drawings of FIG. 1 through FIG. 8. Here, it is to be noted that the present embodiment is an example of applying the notification apparatus according to the present invention to a motion sickness prevention apparatus.

The construction of the present embodiment of the notification apparatus 10 constituted by a motion sickness prevention apparatus will be described first.

The construction of the present embodiment of the notification apparatus 10 is mounted in a vehicle. The present embodiment of the notification apparatus 10 is shown in FIG. 1 as comprising acceleration detecting means 1, navigation means 2, imaging means 3, behavior detecting means 4, video creation means 5, control means 6, setting means 7, and video display means 8.

The acceleration detecting means 1 is constituted by at least one of a speed sensor for detecting acceleration and deceleration of the vehicle, an angular speed sensor for detecting an angular speed of the vehicle, and a movement sensor for detecting an movement (pitching, rolling) frequency of the vehicle, and detects at least one of accelerations along a longitudinal direction, an altitudinal direction, and a traveling direction based on at least one of the acceleration detected by the speed sensor, the angular speed detected by the angular speed, and the movement frequency detected by the movement sensor.

The behavior detecting means 4 detects at least one of vehicle behaviors including right turn, left turn, acceleration, and deceleration runs of the vehicle, based on the output from the acceleration detecting means 1.

The navigation means 2 is constituted by a commonly known navigation apparatus, and includes a GPS receiver for acquiring a current position, a memory for storing map information, operation inputting means for permitting a user to input a destination point, a route searching unit for searching a recommended travel route starting from the current position acquired by the GPS receiver to the destination point inputted by the operation inputting means, and a display unit for displaying the recommended in combination with roadway information.

The behavior detecting means 4 detects at least one of vehicle behaviors including right turn or left turn, acceleration or deceleration, ascending or descending run of the vehicle based on the output from the navigation means 2. The behavior detecting means 4 receives roadway information on a route from the navigation means 2 while the vehicle is guided by the navigation means 2 along the recommended travel route. On the other hand, the behavior detecting means 4 receives roadway information in front of the vehicle from the navigation means 2 while the vehicle is not guided by the navigation means 2.

The roadway information received by the behavior detecting means 4 from the navigation means 2 includes angle of right turn or left turn, curvature of roadway, angle of roadway gradient, angle of bank, condition of roadway surface, width of roadway, presence or absence of traffic signal, ascending run or descending run, right turn lane run or left turn lane run, and/or the like.

The imaging means (video acquiring means) 3 is constituted by a camera unit, and takes a video in front of the vehicle. The behavior detecting means 4 obtains roadway information in front of the vehicle after processing the mage taken by the imaging means 3, and detects at least one of vehicle behaviors including right turn or left turn, acceleration or deceleration, or ascending or descending run of the vehicle. The roadway information obtained by the behavior detecting means 4 as a result of processing the video includes angle of right turn or left turn, curvature of roadway, angle of roadway gradient, angle of bank, condition of roadway surface, width of roadway, presence or absence of traffic signal, ascending run or descending run, right turn lane run or left turn lane run, and/or the like, similar to the roadway information obtained by the behavior detecting means 4 from the navigation means 2.

Further, the behavior detecting means 4 is constituted by a computer including a CPU (Central Processing Unit), a ROM (Read Only Memory), a RAM (Random Access Memory), and/or the like, and designed to detect the behavior of the vehicle, in response to the operation of a vehicle driver. This means that the behavior detecting means 4 detects at least one of right turn, left turn, acceleration, deceleration run of the vehicle behavior in response to at least one of steering operation, accelerator operation, brake operation, engine braking operation, shift-change operation, turn signal indicator operation, and hazard indicator operation by a vehicle driver.

Further, the behavior detecting means 4 divides the detected acceleration or deceleration, right turn or left turn run of the vehicle into a plurality of scales, i.e., levels. This means that the behavior detecting means 4 determines the corresponding level of, for example, the detected acceleration or deceleration run of the vehicle, after comparing the acceleration detected by the acceleration detecting means 1 with a plurality of threshold values.

The video creation means 5 is constituted by, for example, a game machine, an audio-visual reproduction apparatus such as a television or a DVD (Digital Video Disc) player.

The video display means 8 is constituted by a display device such as a liquid crystal display or a screen to have videos projected thereon, and displays TV pictures, movies, game, and/ or the like. The video display means 8 may be any position such as a rear seat, or a ceiling, as long as the video display means 8 can be seen by vehicle passengers other than the driver. It is needless to mention that the video display means 8 may be disposed in a position where it can be seen by the vehicle driver, but it is preferable that the video display means 8 is disposed in a position where it can be seen by the vehicle passengers in priority to others.

The control means 6 is constituted by the above-mentioned computer, and controls, if necessary, the video display means 8 to have the display means 8 display, for example, the video taken by the imaging means 3, in accordance with the behavior detected by the behavior detecting means 4.

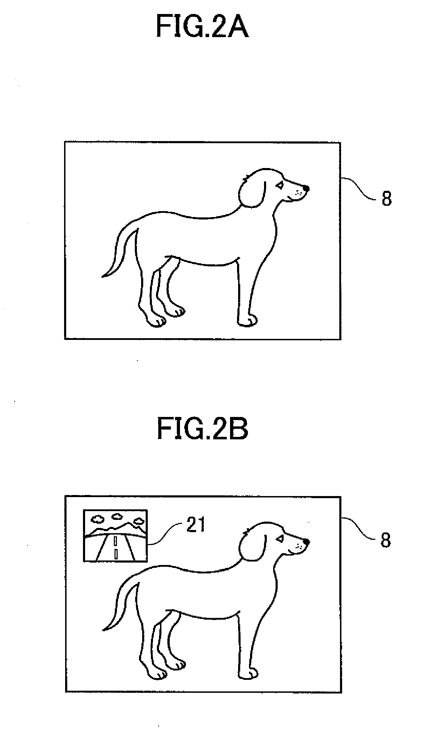

The control means 6 can have the video display means 8 display the video taken by the imaging means 3 selectively in a plurality of display modes. While the video display means 8 displays a TV picture, or the like, as shown in FIG. 2A, the control means 6 may have the video display means 8 interrupt the TV picture, and display the video taken by the imaging means 3 selectively in, for example, typical display modes, i.e., in a full screen mode having the video displayed in a full screen (in place of the TV picture shown in FIG. 2A) and in a split screen mode having the video displayed in a split screen 21, as shown in FIG. 2B.

The behavior detecting means 4 determines the corresponding level of the detected acceleration or deceleration, right turn or left turn run of the vehicle, and the control means 6 has the video display means 8 display the video showing the front of the vehicle selectively in the full screen and the split screen 21 of the video display means 8 for a predetermined time period, if the level of the detected behavior of the vehicle is higher than a predetermined level. After the predetermined time period elapses, the video display means 8 displays again the previously watched TV picture or the like at the full screen mode.

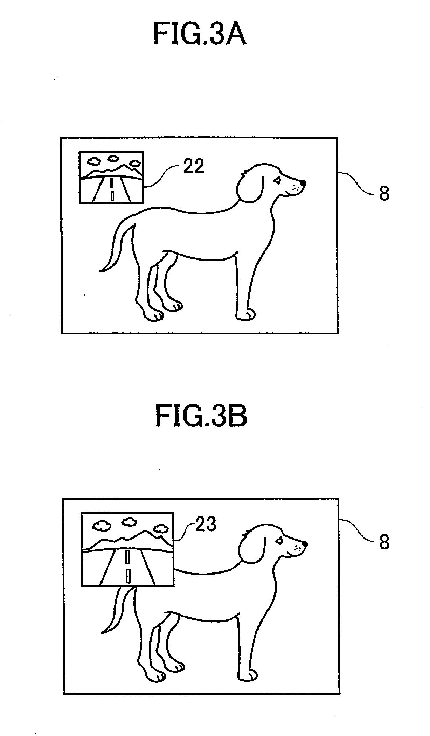

Further, the control means 6 changes the size of the split screen displayed by the video display means 8 in accordance with the level of the detected behavior of the vehicle detected by the behavior detecting means 4. If, for example, the level of the detected acceleration or deceleration, right turn or left turn run of the vehicle is lower than a predetermined level, i.e., the level of the acceleration or deceleration is lower than a predetermined level, the roadway curve is lower than a predetermined level, or the like, the control means 6 has the video display means 8 display a small split screen 22, as shown in FIG. 3A. If, on the other hand, the level of the detected acceleration or deceleration, right turn or left turn run of the vehicle is higher than a predetermined level, i.e., the level of the acceleration or deceleration is lower than a predetermined level, the roadway curve is higher than a predetermined level, or the like, the control means 6 has the video display means 8 display a large split screen 23, as shown in FIG. 3B. This means that the control means 6 has the video display means 8 selectively display a plurality of sizes of the split screen in accordance with the level of the detected behavior of the vehicle detected by the behavior detecting means 4.

Further, the control means 6 move the split screen within the screen displayed by the video display means 8 at least one direction or two or more directions of upward, downward, left, right, and oblique directions, in accordance with the level of the detected behavior of the vehicle detected by the behavior detecting means 4.

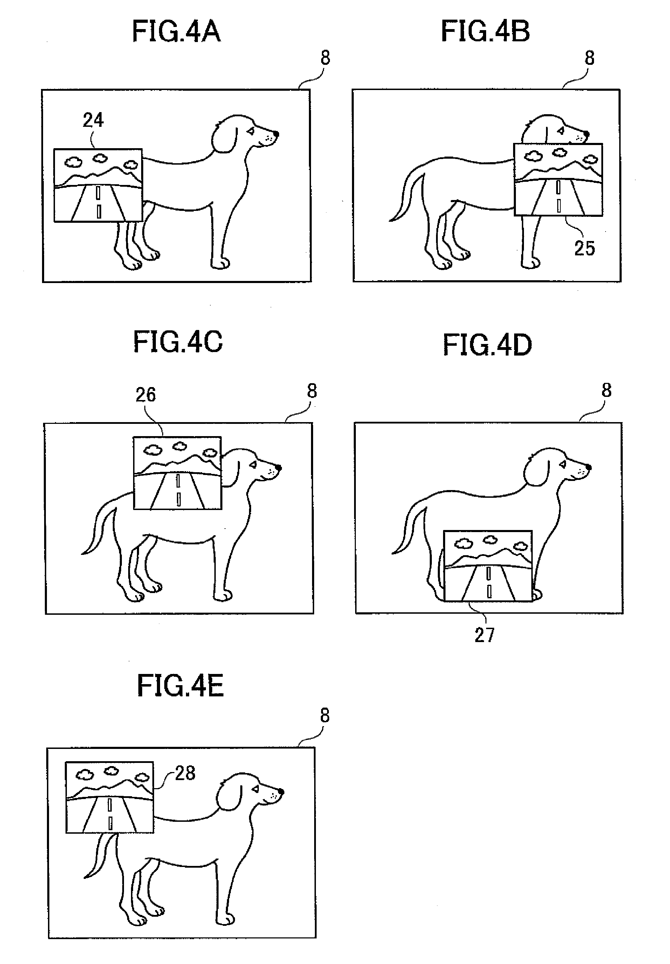

If, for example, the vehicle turns left, the control means 6 moves the split screen 24 within the screen displayed by the video display means 8 in a left direction for a predetermined time period, as shown in FIG. 4A. If, on the other hand, the vehicle turns right, the control means 6 moves the split screen 25 within the screen displayed by the video display means 8 in a right direction for a predetermined time period, as shown in FIG. 4B.

Further, the control means 6 may move the split screen 26 within the screen displayed by the video display means 8 in accordance with a relief of the roadway. If, for example, the vehicle travels ascending slope or accelerates the speed, the control means 6 may move the split screen 26 within the screen displayed by the video display means 8 in an upward direction for a predetermined time period, as shown in FIG. 4C. If, on the other hand, the vehicle travels descending slope or decelerates the speed, the control means 6 may move the split screen 27 within the screen displayed by the video display means 8 in a downward direction for a predetermined time period, as shown in FIG. 4D.

Further, if the vehicle accelerates the speed, the control means 6 may move the split screen 26 within the screen in a downward direction for a predetermined time period, as shown in FIG. 4D. If, on the other hand, the vehicle decelerates the speed, the control means 6 may move the split screen 27 in an upward direction for a predetermined time period, as shown in FIG. 4C. Further, if the vehicle turns left at an accelerated rate, the control means 6 may move the split screen 28 within the screen displayed by the video display means 8 in a left upward direction for a predetermined time period, as shown in FIG. 4E.

Further, the control means 6 controls the moving speed of the split screen within the screen displayed by the video display means 8 if the split screen is moved into at least one direction or two or more directions of upward, downward, left, right, and oblique directions in accordance with the level of the vehicle behavior detected by the behavior detecting means 4.

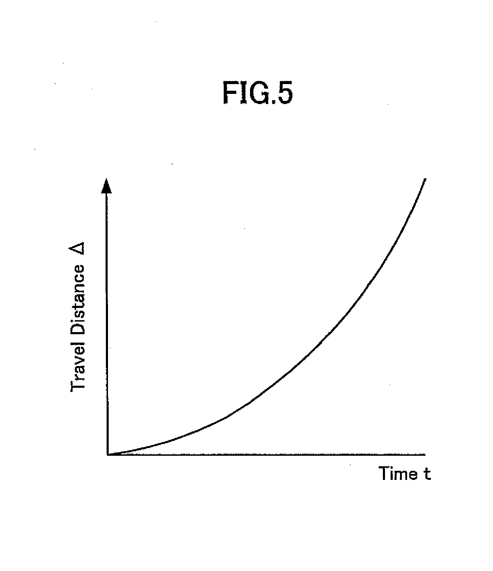

If, for example, the vehicle turns left at an accelerated rate as in the case shown in FIG. 4E, the control means 6 may move the split screen 28 for a predetermined time period in accordance with the increased level of the acceleration, as shown in FIG. 5. The moving speed of the split screen 28 may be determined in such a manner that a travel distance per hour, i.e., the moving speed of the split screen 28 is low if the level of the acceleration is low while, on the other hand, a travel distance per hour, i.e., the moving speed of the split screen 28 is high if the level of the acceleration is high, so as to inform the vehicle passengers that the vehicle is rapidly accelerated.

In the case that the vehicle passengers sit in rear-facing seats and the screen of the video display means 8 is facing toward the traveling direction of the vehicle, viz., the display screen of the video display means 8 is facing toward a direction opposite to the rear of the vehicle, the split screen may be moved in keeping with viewing fields of the vehicle passengers for a predetermined time period.

This means that the split screen 24 or 25 may be moved in a direction opposite to that shown in FIG. 4A or 4B so that the vehicle passengers sitting in the rear-facing seats can visually recognize that the vehicle turns left or right correctly. In addition, the moving direction of the split screen if the vehicle runs at an accelerated or decelerated rate may be reversed since the vehicle passengers are facing toward the direction opposite to the traveling direction.

Further, the control means 6 changes the transparency level of the split screen displayed by the video display means 8, in accordance with the level of the detected behavior of the vehicle detected by the behavior detecting means 4.

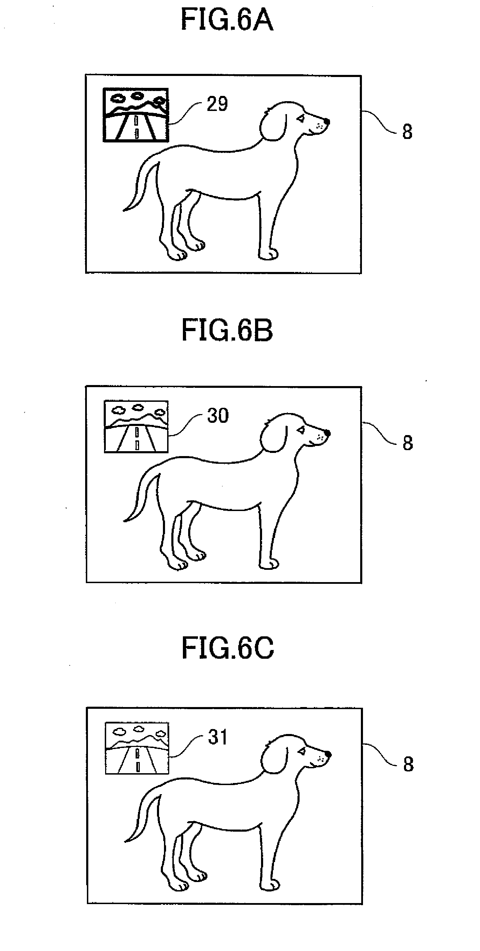

If, for example, the level of the acceleration or deceleration, right turn or left turn run is high, the control means 6 has the video display means 8 display a less transparent (sharp) split screen 29 within the screen displayed by the video display means 8 as shown in FIG. 6A for a predetermined time period.

As the level of the acceleration or deceleration, right turn or left turn run is gradually decreased, the control means 6 has the video display means 8 display more transparent (see-through) split screens 30 and 31 within the screen displayed by the video display means 8 respectively as shown in FIGS. 6B and 6C for respective predetermined time periods.

If, for example, the vehicle turns left at an accelerated rate, the control means 6 may change the transparency level of the split screen in such a manner that the transparency level of the split screen is changed from the higher level to the lower level or vice versa for a predetermined time period.

The setting means 7 is constituted by an operational inputting unit such as a keyboard and a touch panel and sets the display mode of the video displayed by the video display means 8

This means that the setting means 7 sets whether the notification apparatus should be activated or not, whether the video display means 8 should display an interrupted (full) screen or a split screen, a time period for which the interrupted screen or the split screen is to be displayed, a size of the split screen if the split screen is displayed, and/ or the like.

Further, the setting means 7 sets whether the control means 6 should have the split screen displayed by the video display means 8 moved or not, the moving speed of the split screen controlled or not, the size of the split screen changed or not, the transparency level of the split screen controlled or not, the transparency level of the split screen changed or not, and/ or the like.

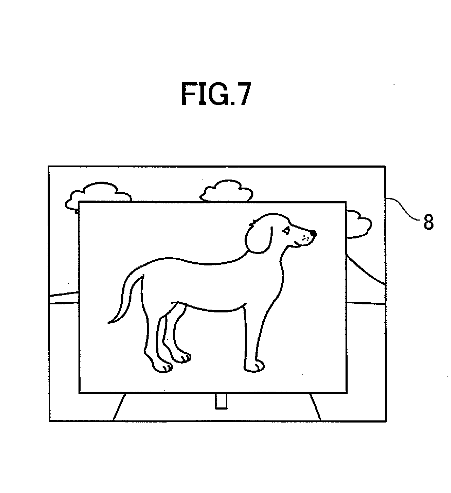

The control means 6 may have the video display means 8 display the TV picture in the center, and the video showing the front of the vehicle picture taken by the imaging means 3 around the TV picture, as shown in FIG. 7.

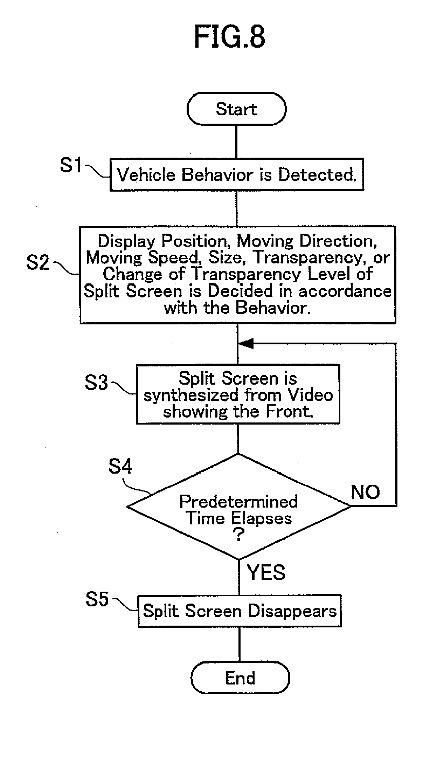

The operation of the present embodiment of the notification apparatus 10 will be described with reference a flowchart shown in FIG. 8 hereinlater. The flowchart shown in FIG. 8 represents a motion sickness prevention program stored in the ROM forming part of the control means 6, and the program will be carried out by the CPU forming part of the control means 6. It is assumed that the setting means 7 is, in advance, set by a vehicle driver to have the split screen displayed.

As shown in FIG. 8, the behavior detecting means 4 is operated to detect the current behavior of the vehicle (step S1). The behavior detecting means 4 is operated to detect the level of, for example, left or right turn run based on the acceleration or deceleration in a left or right direction outputted from the acceleration detecting means 1, a steering angle of the steering wheel of the vehicle, a shape of the roadway in front of the vehicle outputted from the navigation means 2, and/or the like.

The behavior detecting means 4 may calculate the shape of the roadway in front of the vehicle based on the image in front of the vehicle outputted from the imaging means 3, and detect the level of the left or right turn based on the shape of the roadway in front of the vehicle, thus calculated.

Further, the behavior detecting means 4 is operated to detect the level of acceleration or deceleration run of the vehicle based on the acceleration in the traveling direction of the vehicle outputted from the acceleration detecting means 1, the throttle opening of throttle valve (accelerator) and brake operation of the vehicle, vehicle speed information outputted from the navigation means 2, and/or the like.

The behavior detecting means 4 may calculate the current vehicle speed based on the image in front of the vehicle currently outputted from the imaging means 3 and the image in front of the vehicle in past outputted from the imaging means, and detect the level of acceleration run based on the current vehicle speed thus calculated.

The control means 6 is then operated to decide a display position, a moving direction, a moving speed, a size, a transparency level, and/or change of the transparency level of the split screen, in accordance with the current behavior of the vehicle detected in the step S1 (step S2), synthesizes a split screen from the image taken by the imaging means 3, and have the split screen displayed within the screen of the video display means 8 in accordance with the display position, the moving direction, the moving speed, the size, the transparency level, and/or change of the transparency level of the split screen decided in the step S2 (step S3).

Here, it is assumed that the display mode such as the display position, the moving direction, the moving speed, the size, the transparency level, and/or change of the transparency level of the split screen is set by the vehicle driver using the setting means 7.

If the process in the step S3 is completed, it is judged whether or not a predetermined time period elapses (step S4). If it is judged that the predetermined time period elapses, the split screen disappears (step S5), and the TV picture appears.

While it has been described that the setting means 7 has been in advance operated by the vehicle driver to have the split screen displayed, this does not limit the present invention. In the case that the interrupted screen is displayed, the same operation is carried out except for the process of deciding the display position, the moving direction, the moving speed, and/or the size in the step S2, and thus not will be described to avoid tedious repetition.

As will be appreciated from the foregoing description, it will be understood that the present embodiment of the notification apparatus 10 allows vehicle passengers to anticipate and prepare for the change of the vehicle behavior even though the vehicle passengers may watch, for example, TV pictures displayed by the video display means, thereby enhancing riding comfort of the vehicle passengers, resulting from the fact that the notification apparatus 10 comprises behavior detecting means 4 for detecting a behavior of a vehicle, video display means 8 for displaying a video, imaging means 3 for taking a video ahead toward the traveling direction of the vehicle and control means 6 for controlling a display mode, in which the video display means 8 displays the obtained video, in accordance with the behavior detected by the behavior detecting means 4.

Further, the present embodiment of the notification apparatus 10 can reliably detect a behavior imparted to the vehicle such as acceleration or deceleration run, resulting from the fact that the notification apparatus 10 comprises acceleration detecting means 1, and the behavior detecting means 4 detects the behavior based on an output from the acceleration detecting means 1.

Further, the present embodiment of the notification apparatus 10 can reliably detect a behavior imparted to the vehicle such as left or right turn, acceleration or deceleration run resulting from the fact that the behavior detecting means 4 detects at least one of vehicle behaviors including right turn, left turn, acceleration, and deceleration runs of the vehicle, based on at least one of steering operation, accelerator operation, brake operation, shift-change operation, engine braking operation, turn signal indicator operation, and hazard indicator operation by the vehicle driver.

Further, the present embodiment of the notification apparatus 10 can anticipate a behavior to be imparted to the vehicle with ease and let the vehicle passengers know it in advance, resulting from the fact that the notification apparatus 10 comprises navigation means for guiding the vehicle along a travel route, and the behavior detecting means 4 detects the behavior based on an output from the navigation means 2.

Further, the present embodiment of the notification apparatus 10 can recognize roadway information ahead to the traveling direction of the vehicle and anticipate a behavior to be imparted to the vehicle with ease, and let the vehicle passengers know it in advance, resulting from the fact that the behavior detecting means 4 detects the behavior based on an output from the imaging means 3. In addition, the behavior detecting means 4 may detect the behavior based on at least one of outputs outputted from the navigation means and the imaging means 3.

Further, the present embodiment of the notification apparatus 10 allows vehicle passengers to anticipate the change of the vehicle behavior even though the vehicle passengers may watch, for example, TV pictures, resulting from the fact that the control means 6 interrupts the TV picture and have the video display means display a video showing the front of the vehicle in a full screen or in a split screen within the TV picture of the video display means.

Further, the present embodiment of the notification apparatus 10 allows vehicle passengers to anticipate the level of the vehicle behavior and prepare for the vehicle behavior, resulting from the fact that the control means 6 controls a display position, a moving direction, a moving speed, a size, a transparency level, and/or change of the transparency level of the split screen, in accordance with the behavior of the vehicle detected by the behavior detecting means 4.

Further, the present embodiment of the notification apparatus 10 allows vehicle passengers to visually recognize that the vehicle turns left or right correctly whenever the vehicle turns left or right even though the vehicle passengers sit in rear-facing seats and the screen of the video display means 8 is facing toward the traveling direction of the vehicle, viz., the display screen of the video display means 8 is facing toward a direction opposite to the rear of the vehicle, resulting from the fact that the control means 4 changes the moving direction of the split screen in keeping with viewing fields of the vehicle passengers.

Further, the present embodiment of the notification apparatus 10 allows vehicle passengers to change a display mode of the video display means 8 by setting the video display means 8 to have the video display means 8 display a split screen or not, and arbitrarily decide a display position, a moving speed, a moving direction, a size, a transparency level, and/or change of the transparency level of the split screen, resulting from the fact that the notification apparatus 10 comprises setting means 7 for allowing vehicle passengers to set the video display means to have the display mode changed.

While it has been described in the above that in the present embodiment of the notification apparatus 10, the behavior detecting means 4 divides the detected acceleration or deceleration, right turn or left turn run of the vehicle into a plurality of levels, and determine the corresponding level of acceleration or deceleration, right turn or left turn run, this does not limit the present invention. According to the present invention, the notification apparatus may detect only whether the vehicle is accelerating or not, decelerating or not, turning left or not, and turning right or not.

### INDUSTRIAL APPLICABILITY OF THE PRESENT INVENTION

As will be seen from the foregoing description, the notification apparatus according to the present invention has effects of enhance riding comfort of vehicle passengers even though the vehicle passengers may watch, for example, a television apparatus, and is available as a motion sickness prevention apparatus for prevent the vehicle passengers from suffering motion sickness.

## Claims

1. A notification apparatus, comprising:
behavior detecting means for detecting a behavior of a vehicle;
video display means for displaying a video;
video acquiring means for acquiring a video showing the front of said vehicle in a traveling direction; and
control means for controlling a display of said video displayed by said video display means, in accordance with said behavior detected by said behavior detecting means.

2. The notification apparatus as set forth in claim 1, which further comprises:
acceleration detecting means for detecting of said vehicle, and in which
said behavior detecting means is operative to detect said behavior on the basis of said acceleration detected by said acceleration detecting means.

3. The notification apparatus as set forth in claim 1, in which
said behavior detecting means is operative to detect said behavior on the basis of vehicle driver's operation to said vehicle.

4. The notification apparatus as set forth in claim 1, which further comprises:
navigation means for guiding said vehicle along a travel route, and in which
said behavior detecting means is operative to detect said behavior on the basis of said travel route along which said navigation means guides said vehicle.

5. The notification apparatus as set forth in claim 1, in which
said behavior detecting means is operative to detect said behavior on the basis of said video acquired by said video acquiring means.

6. The notification apparatus as set forth in claim 1, in which
said control means is operative to control said video display means to have said video display means display said video acquired by said video acquiring means.

7. The notification apparatus as set forth in claim 6, in which
said control means is operative to control said video display means to have said video display means display said video acquired by said video acquiring means in a split screen.

8. The notification apparatus as set forth in claim 7, in which
said control means is operative to control said video display means to have said split screen displayed by said video display means moved in accordance with said behavior detected by said behavior detecting means.

9. The notification apparatus as set forth in claim 8, in which
said control means is operative to control said video display means to have said split screen displayed by said video display means moved selectively in a moving direction and at a moving speed determined in accordance with a magnitude level of said behavior detected by said behavior detecting means.

10. The notification apparatus as set forth in claim 8, in which
said control means is operative to control said video display means to have said split screen displayed by said video display means moved in a moving direction determined in accordance with a relief of a roadway detected by said behavior detecting means.

11. The notification apparatus as set forth in claim 8, in which
said control means is operative to control said video display means to have a moving direction of said split screen displayed by said video display means changed in keeping with a position of a vehicle passenger sitting in a vehicle seat.

12. The notification apparatus as set forth in claim 7, in which
said control means is operative to control said video display means to have a size of said split screen displayed by said video display means changed in accordance with a magnitude level of said behavior detected by said behavior detecting means.

13. The notification apparatus as set forth in claim 7, in which
said control means is operative to control said video display means to have a transparency level of said split screen displayed by said video display means changed in accordance with a magnitude level of said behavior detected by said behavior detecting means.

14. The notification apparatus as set forth in claim 6, in which
said control means is operative to control said video display means to have said video display means display said video acquired by said video acquiring means in an interrupted screen.

15. The notification apparatus as set forth in claim 14, in which
said control means is operative to control said video display means to have a transparency level of said interrupted screen displayed by said video display means changed in accordance with a magnitude level of said behavior detected by said behavior detecting means.

16. The notification apparatus as set forth in claim 1, which further comprises:
setting means for setting a display mode of said video displayed by said video display means.

17. A vehicle having the notification apparatus as set forth in any one of claim 1 through claim 16.

## Amended claims

### Amended claims under Art. 19.1 PCT

**1.** (Unamended) A notification apparatus, comprising:
behavior detecting means for detecting a behavior of a vehicle;
video display means for displaying a video;
video acquiring means for acquiring a video showing the front of said vehicle in a traveling direction; and
control means for controlling a display of said video displayed by said video display means, in accordance with said behavior detected by said behavior detecting means.

**2.** (Unamended) The notification apparatus as set forth in claim 1, which further comprises:
acceleration detecting means for detecting of said vehicle, and in which
said behavior detecting means is operative to detect said behavior on the basis of said acceleration detected by said acceleration detecting means.

**3.** (Unamended) The notification apparatus as set forth in claim 1, in which
said behavior detecting means is operative to detect said behavior on the basis of vehicle driver's operation to said vehicle.

**4.** (Unamended) The notification apparatus as set forth in claim 1, which further comprises:
navigation means for guiding said vehicle along a travel route, and in which
said behavior detecting means is operative to detect said behavior on the basis of said travel route along which said navigation means guides said vehicle.

**5.** (Unamended) The notification apparatus as set forth in claim 1, in which
said behavior detecting means is operative to detect said behavior on the basis of said video acquired by said video acquiring means.

**6.** (Unamended) The notification apparatus as set forth in claim 1, in which
said control means is operative to control said video display means to have said video display means display said video acquired by said video acquiring means.

**7.** (Cancelled)

**8.** (Cancelled)

**9.** (Cancelled)

**10.** (Cancelled)

**11.** (Cancelled)

**12.** (Cancelled)

**13.** (Cancelled)

**14.** (Cancelled)

**15.** (Cancelled)

**16.** (Cancelled)

**17.** (Cancelled)
